Europäisches Patentamt

European Patent Office

Office européen des brevets

(11) Veröffentlichungsnummer: **0 417 519 A2**

# EUROPÄISCHE PATENTANMELDUNG

(21) Anmeldenummer: 90116138.0

(22) Anmeldetag: 23.08.90

(51) Int. Cl.⁵: **B29C 67/22**, B29C 33/14, B29C 33/18, //B29L31:58

(30) Priorität: 13.09.89 DE 3930527

(43) Veröffentlichungstag der Anmeldung:
20.03.91 Patentblatt 91/12

(84) Benannte Vertragsstaaten:
**ES FR GB IT SE**

(71) Anmelder: **GRAMMER AG**
Wernher-von-Braun-Strasse 6
W-8450 Amberg/Opf.(DE)

(72) Erfinder: **Kurz, Helmut, Chem.-Ing.**
**Dr.-Christoph-Gack-Strasse 20**
**W-8458 Sulzbach-Rosenberg(DE)**
Erfinder: **Stöberl, Martin**
**Morgenlandstrasse 13**
**W-8472 Schwarzenfeld(DE)**

(74) Vertreter: **LOUIS, PÖHLAU, LOHRENTZ &**
**SEGETH**
**Kesslerplatz 1 Postfach 3055**
**W-8500 Nürnberg-1(DE)**

(54) **Verfahren zur Herstellung eines hinterschäumten Polsterteils und Vorrichtung zur Durchführung des Verfahrens.**

(57) Es wird ein Verfahren zur Herstellung eines hinterschäumten Polsterteils sowie eine Vorrichtung zur Durchführung dieses Verfahrens beschrieben, wobei in ein erstes Formteil (12) einer Form (10) ein Bezug (38) eingebracht wird. Der Bezug (38) wird mit einem zweiten Formteil (14) entlang eines umlaufenden gemeinsamen Anlageabschnittes (30) zwischen den beiden Formteilen (12, 14) festgelegt, wobei die Form (10) unter Ausbildung eines Formhohlraumes (16) verschlossen wird. In den Formhohlraum (16) wird ein Reaktionsgemisch eingebracht, das aufschäumt, den Formhohlraum (16) ausfüllt und sich mit dem Bezug (38) verbindet. Um ein Durchdringen von Luft aus dem Formhohlraum (16) durch den gemeinsamen Anlageabschnitt (30) zu verhindern, wird die Form (10) im Bereich des gemeinsamen Anlageabschnittes (30) abgedichtet. Die Abdichtung erfolgt mittels einer zum gegenüberliegenden Anlageabschnitt der Form (10) gerichteten Strömung eines gasförmigen Strömungsmittels. Zur weiteren Verbesserung der Abdichtung kann ein elastisch nachgiebiges Dichtungsmittel (40) vorgesehen sein.

EP 0 417 519 A2

# VERFAHREN ZUR HERSTELLUNG EINES HINTERSCHÄUMTEN POLSTERTEILS UND VORRICHTUNG ZUR DURCHFÜHRUNG DES VERFAHRENS

Die Erfindung betrifft ein Verfahren zur Herstellung eines hinterschäumten Polsterteils, wobei in ein erstes Formteil einer Form ein Bezug eingebracht wird, der Bezug mit einem zweiten Formteil entlang eines umlaufenden gemeinsamen Anlageabschnittes zwischen den beiden Formteilen festgelegt und die Form unter Ausbildung eines Formhohlraumes verschlossen wird, und in den Formhohlraum ein Reaktionsgemisch eingebracht wird, das während des Reaktionsablaufes aufschäumt, den Formhohlraum ausfüllt und sich mit dem Bezug verbindet, sowie eine Vorrichtung zur Durchführung dieses Verfahrens mit einer Form, die mindestens ein erstes und ein zweites Formteil aufweist, die unter Ausbildung eines Formhohlraumes miteinander entlang eines umlaufenden Anlageabschnittes verbindbar sind.

Zur Durchführung dieses Verfahrens kommen bislang Vorrichtungen zur Anwendung, bei denen der gemeinsame Anlageabschnitt der Formteile entweder mit scharfen Kanten ausgebildet ist, um zwischen den Formteilen eine sichere Abdichtung zu gewährleisten, oder es wird auf derartige Abdichtkanten entlang des gemeinsamen Anlageabschnittes verzichtet, so dass keine sichere Abdichtung des Formhohlraums gegeben ist. Mit Formen, deren gemeinsamer Anlageabschnitt zwischen den Formteilen mit Abdichtkanten ausgebildet ist, ergibt sich der Mangel, dass der Bezug, bei dem es sich bspw. um ein auf der Innenseite des hinterschäumten Polsterteils mit einer Kaschierung beschichtetes textiles Material handelt, durch die Abdichtkanten zumindest optisch sichtbar eingeprägt wird, so dass sich ein optisch nachteiliger Gesamteindruck eines derartigen Polsterteils ergibt. Im Extremfall kann es durch die Abdichtkanten zu einem Einschneiden in den Bezug des Polsterteils kommen. Um solche Einprägungen bzw. um ein solches Einschneiden in den Bezug zu vermeiden, ist es auch möglich, zur Durchführung des eingangs genannten Verfahrens Vorrichtungen zu verwenden, die auf Abdichtkanten der zuletzt erwähnten Art verzichten. Dann ist jedoch - wie bereits ausgeführt wurde - eine sichere Abdichtung der Form entlang des gemeinsamen umlaufenden Anlageabschnittes der Formteile, bei denen es sich um das Formwerkzeug und einen das Formwerkzeug abschliessenden Deckel bzw. um einen am Formwerkzeug anzuordnenden Zwischenrahmen handeln kann, nicht gewährleistet. Dadurch wird zwar eine Einprägung in den Bezug des Polsterteils vermieden, das im Formhohlraum aufschäumende Reaktionsgemisch kann dann jedoch zwischen den Formteilen bzw. im Extremfall durch den Bezug durchdringen, was zu einer unerwünschten Verhärtung des Bezugs und somit zu einer unerwünschten Verhärtung des Polsterteils führen kann.

Deshalb liegt der Erfindung die Aufgabe zugrunde, ein Verfahren der eingangs genannten Art und eine Vorrichtung zur Durchführung dieses Verfahrens zu schaffen, wobei Einprägungen im Bezug und gleichzeitig ein Eindringen des Reaktionsgemisches in den Bezug des Polsterteils beim Aufschäumen des Reaktionsgemisches und somit eine unerwünschte Verhärtung des Bezugs vermieden wird.

Diese Aufgabe wird verfahrensgemäss dadurch gelöst, dass im Bereich des umlaufenden gemeinsamen Anlageabschnittes der Formteile ein vorzeitiges Ausströmen des Gases verhindert wird, so dass sich in dem der Form zugewandten Bereich des Bezugs ein Gaspolster ausbildet. Durch den Gaspolster in dem der Form zugewandten Bereich des Bezugs, in welchem das Gas unter einem bestimmten erhöhten Druck steht, wird das aufschäumende Reaktionsgemisch daran gehindert, zu weit in den Bezug einzudringen bzw. durch den Bezug durchzudringen. Der sich einstellende Gasdruck ist vom Reaktionsablauf des Reaktionsgemisches im Formhohlraum abhängig. Das Gas wird an einem Ausströmen durch den umlaufenden gemeinsamen Anlageabschnitt der Formteile hindurch in vorteilhafter Weise dadurch gehindert, dass die Form entlang des umlaufenden gemeinsamen Anlageabschnittes mittels einer in den Formhohlraum hinein gerichteten Strömung eines gasförmigen Strömungsmittels abgedichtet wird. Das gasförmige Strömungsmittel bildet somit eine Gegenströmung zur während des Reaktionsablaufes des Reaktionsgemisches aus dem Formhohlraum durch den gemeinsamen Anlageabschnitt durchtreten wollenden Gas, so dass mit Hilfe der in den Formhohlraum hineingerichteten Strömung des gasförmigen Strömungsmittels das aus dem Formhohlraum austreten wollende Gas daran gehindert wird, durch den gemeinsamen Anlageabschnitt durchzuströmen. Bei dem gasförmigen Strömungsmittel kann es sich um Luft oder um ein beliebiges anderes Gas handeln. Der Druck der in den Formhohlraum hineingerichteten Strömung des gasförmigen Strömungsmittels ist abhängig vom Druck in dem der Form zugewandten Bereich des im Bezug ausgebildeten Gaspolsters.

Als vorteilhaft hat es sich erwiesen, wenn die Strömung des gasförmigen Strömungsmittels durch den Bezug gelenkt wird. Auf diese Weise ergibt sich eine sog. Luftsperre, welche das Gas daran hindert, durch den gemeinsamen Anlageabschnitt der Formteile durchzutreten. Das bedeutet jedoch gleichzeitig, dass auch das Reaktionsgemisch sicher daran gehindert wird, durch den gemeinsamen Anlageabschnitt der Formteile durchzudringen.

Eine weitere Verbesserung der Abdichtung der Form entlang des umlaufenden gemeinsamen Anlageabschnittes der Formteile ergibt sich, wenn die Form entlang des umlaufenden gemeinsamen Anlageabschnittes mit einem elastisch nachgiebigen Dichtungsmittel abgedichtet wird. Dieses elastisch nachgiebige Dichtungsmittel wird hierbei insbes. auf der Seite des Anlageabschnittes vorgesehen, die vom Formhohlraum abgewandt ist. Nachdem die primäre Abdichtung durch die in den Formhohlraum hineingerichtete Strömung des gasförmigen Strömungsmittels erzielt wird, kann das elastisch nachgiebige Dichtungsmittel derartig gewählt bzw. ausgebildet sein, dass durch das elastisch nachgiebige Dichtungsmittel eine unerwünschte permanente Einprägung im Bezug des Polsterteils vermieden wird.

Die der Erfindung zugrundeliegende Aufgabe wird vorrichtungsgemäss dadurch gelöst, dass die Form eine entlang des umlaufenden Anlageabschnittes vorgesehene Dichtungseinrichtung aufweist. Die Dichtungseinrichtung weist vorzugsweise eine Düseneinrichtung für ein gasförmiges Strömungsmittel auf, die zum gegenüberliegenden Formteil der Form hin ausgerichtet ist. Bei dieser Düseneinrichtung kann es sich um eine Schlitzdüse handeln, die ununterbrochen um den gemeinsamen Anlageabschnitt der Formteile der Form umläuft. Anstelle einer ununterbrochen umlaufenden schlitzförmigen Düseneinrichtung ist es auch möglich, die Düseneinrichtung mit voneinander beabstandeten Düsenöffnungen auszubilden. Es versteht sich jedoch, dass mit einer schlitzförmigen Düseneinrichtung eine bessere Abdichtung des Formhohlraums der Form zwischen den Formteilen möglich ist als mit einer Düseneinrichtung, die voneinander beabstandete Düsenöffnungen besitzt.

Die Düseneinrichtung ist vorzugsweise in den Bezug hinein ausgerichtet. Dadurch ergibt sich eine optimale Luftsperre, welche die aus dem Formhohlraum infolge des Ablaufe der Reaktion des Reaktionsgemisches austreten wollende Gas daran hindert, durch den zwischen den Formteilen befindlichen Bezug durchzudringen. Erfindungsgemäss ist es somit möglich, einen durchlässigen Bezug, d.h. einen Bezug zu verwenden, der nicht mit einer luftdichten Folie ausgebildet zu sein braucht. Durch einen solchen luftdurchlässigen Bezug ergibt sich ein Polsterteil, das bei Verwendung für einen Sitz ein gutes Sitzklima ergibt.

Die Düseneinrichtung kann mindestens an dem Formteil vorgesehen sein, das der Innen- bzw. Rückseite des zwischen den Formteilen eingeklemmten Bezugs zugewandt ist. Wie bereits ausgeführt worden ist, kann der Bezug an seiner Innen- bzw. Rückseite mit einer Kaschierung versehen sein.

Neben der Düseneinrichtung kann die Dichtungseinrichtung mindestens ein elastisch nachgiebiges Profilelement aufweisen. Dieses elastisch nachgiebige Profilelement ist vorzugsweise an dem Formteil vorgesehen, das der Innen-bzw. Rückseite des zwischen den Formteilen eingeklemmten Bezugs zugewandt ist. Bei dem elastisch nachgiebigen Profilelement handelt es sich bspw. um ein endloses Element aus einem Gummi- oder Kunststoffmaterial. Durch ein solches elastisch nachgiebiges Profilelement wird die mit Hilfe der Düseneinrichtung bewirkte Abdichtung zwischen den Formteilen verbessert, ohne dass durch das elastisch nachgiebige Profilelement eine unerwünschte permanente Einprägung im Bezug des Polsterteils erfolgt.

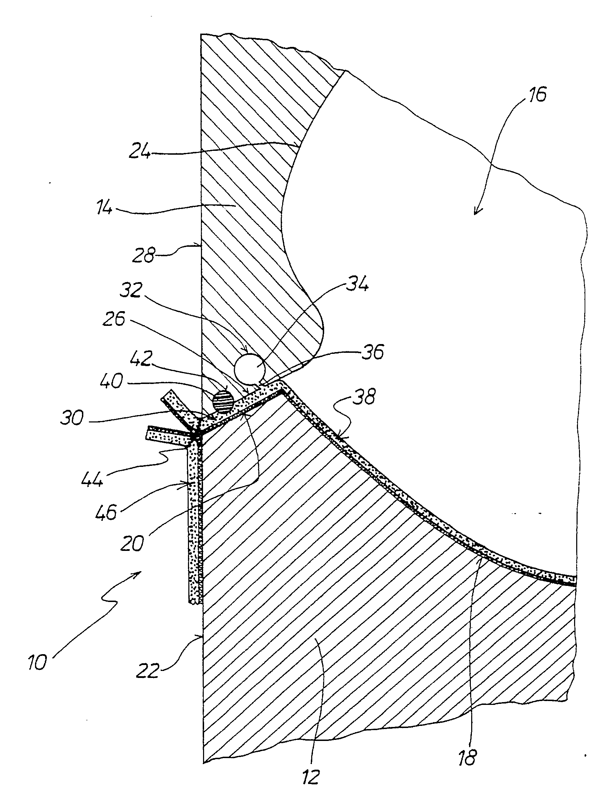

Weitere Einzelheiten, Merkmale und Vorteile ergeben sich aus der nachfolgenden Beschreibung einer in der Zeichnung im Schnitt abschnittweise dargestellten Form zur Herstellung eines hinterschäumten Polsterteils.

Die Form 10 weist ein erstes Formteil 12 und ein zweites Formteil 14 auf, die im verschlossenen Zustand einen Formhohlraum 16 festlegen. Beim ersten Formteil 12 handelt es sich bspw. um das sog. Formwerkzeug, während es sich bei dem zweiten Formteil 14 um einen Deckel oder um einen Zwischenrahmen handeln kann.

Das erste Formteil 12 weist eine Innenkontur 18, einen die Innenkontur 18 begrenzenden umlaufenden Randabschnitt 20 und eine Aussenfläche 22 auf. Das zweite Formteil 14 der Form 10 weist eine Innenkontur 24, einen die Innenkontur 24 begrenzenden umlaufenden Randabschnitt 26 und eine Aussenfläche 28 auf. Die beiden Randabschnitte 20 und 26 bilden den gemeinsamen umlaufenden Anlageabschnitt 30 der Formteile 12 und 14 der Form 10. Am umlaufenden Randabschnitt 26 und/oder am umlaufenden Randabschnitt 20 des Formteils 14 bzw. 12 ist eine Düseneinrichtung 32 vorgesehen, die einen umlaufenden Kanal 34 und eine Schlitzdüse 36 aufweist. Die Schlitzdüse 36 ist derartig orientiert, dass durch sie eine Strömung eines gasförmigen Strömungsmittels in Richtung zum gegenüberliegenden Randabschnitt des Formteils 14 bzw. 12 ausgerichtet ist. Durch diese Strömung wird das aus dem Formhohlraum 16 austreten wollende Gas daran gehindert, durch den gemeinsamen Anlageabschnitt 30 der Formteile 12 und 14 bzw. durch den zwischen den Formteilen 12 und 14 eingeklemmten Bezug 38 auszutreten. Die Abdichtung des gemeinsamen Anlageabschnittes 30 der beiden Formteile 12 und 14 wird durch ein elastisch nachgiebiges Profilelement 4u weiter verbessert. Das Profilelement 40, bei dem es sich um einen endlosen Strang aus Gummi- oder Kunststoffmaterial handeln kann, ist in einer dafür vorgesehenen Ausnehmung 42 angeordnet, die im Formteil 14 bzw. 12 ausgebildet ist, und die um den Randabschnitt 26 bzw.2u des Formteils 14 bzw. 12 umläuft.

Zur Durchführung des erfindungsgemässen Verfahrens wird wie folgt vorgegangen: Bei vom Formteil 12 entferntem Formteil 14 wird auf dem Formteil 12 der Bezug 38 derartig angeordnet, dass er mit seiner Vorder- bzw.Aussenseite der Innenkontur 18 des Formteils 12 zugewandt ist. Mit dem Bezug 38 ist mittels einer Verbindungsnaht 44 ein zweites Bezugsteil 46 verbunden, das mit seiner Aussenseite der Aussenfläche 22 des Formteils 12 zugewandt ist. Die Innenseite des Bezugs 38 ist zum Formhohlraum 16 hin orientiert. Nach dem Anlegen des Bezugs 38 mit seiner Aussenseite an die Innenkontur 18 des Formteils 12, was bspw. mittels eines Unterdrucks erfolgen bzw. unterstützt werden kann, wird die Form 10 mit dem Formteil 14 unter Ausbildung des Formhohlraumes 16 verschlossen. Vorher, gleichzeitig oder nachher wird in den Formhohlraum 16 ein Reaktionsgemisch eingebracht, das während des Reaktionsablaufs aufschäumt und den Formhohlraum 16 vollkommen ausfüllt. Beim Aufschäumen des Reaktionsgemisches ensteht im Formhohlraum 16 ein Gasdruck. Um ein Durchdringen der im Formhohlraum 16 befindlichen Gas durch den gemeinsamen Anlageabschnitt 30 der Formteile 12 und 14 hindurch zu verhindern, ist die Düseneinrichtung 32 und das elastisch nachgiebige Profilelement 40 vorgesehen. Während des Ablaufes der Reaktion des Reaktionsgemisches ergibt sich zwischen dem Reaktionsgemisch und der Innenseite des Bezugs 38 ein flächige mechanische Verbindung. Nach dem Ablauf der Reaktion des Reaktionsgemisches kann das Formteil 14 vom Formteil 12 entfernt werden, wonach der Bezug 46 um das Polsterteil, d.h. um den durch die Innenkontur 24 gegebenen Oberflächenabschnitt des Polsterteils herumgeklappt wird, so dass sich ein allseitig mit Bezug 38, 46 bedecktes hinterschäumtes Polsterteil ergibt. Durch die erfindungsgemässe Ausbildung der Dichtungseinrichtung 32, 40 wird nicht nur eine unerwünschte permanente Einprägung im Bezug 38 vermieden, sondern es wird gleichzeitig durch die Ausbildung eines Luftpolsters in den dem Formteil 12 bzw. dessen Innenkontur 18 zugewandten Randbereichen des Bezugs 38 ein Durchdringen des Reaktionsgemisches durch den Bezug 38 und somit eine unerwünschte Verhärtung desselben auf elegante Weise vermieden.

**Ansprüche**

1. Verfahren zur Herstellung eines hinterschäumten Polsterteils, wobei in ein erstes Formteil (12) einer Form (10) ein Bezug (38) eingebracht wird, der Bezug (38) mit einem zweiten Formteil (14) entlang eines umlaufenden gemeinsamen Anlageabschnittes (30) zwischen den beiden Formteilen (12, 14) festgelegt und die Form (10) unter Ausbildung eines Formhohlraumes (16) verschlossen wird, und in den Formhohlraum (16) ein Reaktionsgemisch eingebracht wird, das während des Reaktionsablaufes aufschäumt, den Formhohlraum (16) ausfüllt und sich mit dem Bezug (38) verbindet,
**dadurch gekennzeichnet,**
dass im Bereich des umlaufenden gemeinsamen Anlageabschnittes (30) der Formteile (12, 14) ein Ausströmen des Gases aus dem Formhohlraum (16) verhindert wird, so dass sich in dem der Form (10) zugewandten Bereich des Bezuges (38) ein Luftpolster ausbildet.

2. Verfahren nach Anspruch 1,
**dadurch gekennzeichnet,**
dass die Form (10) entlang des umlaufenden gemeinsamen Anlageabschnittes (30) mittels einer zum gegenüberliegenden Anlagenabschnitt der Form (10) gerichteten Strömung eines gasförmigen Strömungsmittels abgedichtet wird.

3. Verfahren nach Anspruch 2,
**dadurch gekennzeichnet,**
dass die Strömung des gasförmigen Strömungsmittels durch den Bezug (38) gelenkt wird.

4. Verfahren nach einem der vorhergehenden Ansprüche,
**dadurch gekennzeichnet,**
dass die Form (10) entlang des umlaufenden gemeinsamen Anlageabschnittes (30) ein- oder beidseitig mit einem elastisch nachgiebigen Dichtungsmittel (40) abgedichtet wird.

5. Vorrichtung zur Durchführung des Verfahrens nach einem der vorhergehenden Ansprüche mit einer Form (10), die mindestens ein erstes und ein zweites Formteil (12, 14) aufweist, die unter Ausbildung eines Formhohlraumes (16) miteinander entlang eines umlaufenden Anlageabschnittes (30) verbindbar sind,
**dadurch gekennzeichnet,**
dass die Form (10) eine entlang des umlaufenden Anlageabschnittes (30) vorgesehene Dichtungseinrichtung (32, 40) aufweist.

6. Vorrichtung nach Anspruch 5,
**dadurch gekennzeichnet,**
dass die Dichtungseinrichtung eine Düseneinrichtung (32) für ein gasförmiges Strömungsmittel aufweist, die zum gegenüberliegenden Anlageabschnitt der Form (10) hin ausgerichtet ist.

7. Vorrichtung nach Anspruch 6,
**dadurch gekennzeichnet,**
dass die Düseneinrichtung (32) in den Bezug (38) hinein ausgerichtet ist.

8. Vorrichtung nach Anspruch 6 oder 7,

**dadurch gekennzeichnet,**

dass die Düseneinrichtung (32) mindestens an dem Formteil (14) vorgesehen ist, das der Innen- bzw. Rückseite des zwischen den Formteilen (12, 14) eingeklemmten Bezugs (38) zugewandt ist.

9. Vorrichtung nach einem der Ansprüche 5 bis 8,

**dadurch gekennzeichnet,**

dass die Dichtungseinrichtung mindestens ein elastisch nachgiebiges Profilelement (40) aufweist.

10. Vorrichtung nach Anspruch 9,

**dadurch gekennzeichnet,**

dass das elastisch nachgiebige Profilelement (40) an dem Formteil 12 und/oder 14) vorgesehen ist, das der Innen- bzw. Rückseite des zwischen den Formteilen (12, 14) eingeklemmten Bezugs (38) zugewandt ist.